# EUROPÄISCHE PATENTANMELDUNG

(11) **EP 0 697 692 A2**
(43) Veröffentlichungstag der Anmeldung: **21.02.1996**
(21) Anmeldenummer: 95201962.8
(22) Anmeldetag: 17.07.1995
(51) Int. Cl.: G11B 15/675

(54) **Magnetbandkassettengerät mit einem Laufwerk**

(30) Priorität: 27.07.1994 DE 4426510
(71) Anmelder: Philips Patentverwaltung GmbH, D-22335 Hamburg (DE); PHILIPS ELECTRONICS N.V., NL-5621 BA Eindhoven (NL)
(72) Erfinder: Kunze, Norbert, D-22335 Hamburg (DE); Müller, Dieter, D-22335 Hamburg (DE); Gielkens, Marc, D-22335 Hamburg (DE)
(74) Vertreter: von Laue, Hanns-Ulrich, Dipl.-Ing.

(57) **Zusammenfassung**

Die Erfindung bezieht sich auf ein Magnetbandkassettengerät mit einem Laufwerk, das einen Lademechanismus für Magnetbandkassetten (15) aufweist, die in den Außenwänden für in den Kassetten vorgesehene Magnetbandwickel mit Wickelkernen Wickellöcher (15a) aufweisen, durch die sowohl Wickeldorne des Laufwerkes als auch ein Kassettenhalterhaken (10b) eines Kassettenhalters (10), +der in Einschieberichtung (8) in einer Wand eines Kassettenliftes (3) geführt ist, einführbar sind, wobei der Kassettenhalterhaken (10b) in der Auswurfstellung des Laufwerkes beim Einschieben der Magnetbandkassette (15)in das beim Einschieben vordere Wickelloch (15a) einfällt und in diesem verbleibt, bis die Magnetbandkassette (15) in die Spielposition abgesenkt wird oder aus dem Laufwerk herausgezogen wird, wobei der Kassettenhalter (10) in seiner Führung in Höhenrichtung verformungsfrei kippen kann und die beim Ausschub zum Halten der Magnetbandkassette (15) mittels des Kassettenhalters (10) benötigte Kraft von einer auf den Kassettenhalter (10) einwirkenden Metallfeder (16) herrührt, die so geformt ist, daß die den Kassettenhalter (10) niederdrückende Kraft nach einem geringen Verfahrweg des Kassettenhalters (10) in Kassetten-Einschubrichtung (8) nicht mehr auf den Kassettenhalter (10) einwirkt, und diesen annähernd kraftfrei auf die obere Kassettenwand (1a) gleiten läßt, wobei eine nur in dieser Zwischenposition wirkende Sperre (10g) bewirkt, daß der Kassettenhalter (10) erst weiter eingeschoben werden kann, nachdem der Kassettenhalterhaken (10b) in das Wickelloch (15) der Magnetbandkassette (15) eingefallen ist.

## Beschreibung

Die Erfindung bezieht sich auf Magnetbandkassettengerät mit einem Laufwerk, das einen Lademechanismus für Magnetbandkassetten aufweist, die in den Außenwänden für in den Kassetten vorgesehene Magnetbandwickel mit Wickelkernen Wickellöcher aufweisen, durch die sowohl Wickeldorne des Laufwerkes als auch ein Haken eines Kassettenhalters, der in Einschieberichtung in einer Wand eines Kassettenliftes geführt ist, einführbar sind, wobei der Kassettenhalterhaken in der Auswurfstellung des Laufwerkes beim Einschieben einer Kassette in die beim Einschieben vordere Zugriffsöffnung einfällt und in dieser verbleibt, bis die Kassette in die Spielposition abgesenkt wird oder aus dem Laufwerk herausgezogen wird.

Ein Laufwerk für Magnetbandkassettengerate ist aus der DE 88 05 726.7 U1 (PHD 88-084) bekannt. Der Lademechanismus des Laufwerkes hat einen U-förmigen Kassettenschacht, der aus einer oberen und einer unteren Deckplatte besteht, die an der einen Längsseite über eine Querwand verbunden sind, die die Deckplatten auf einem Abstand entsprechend der Kassettenhöhe miteinander verbindet. Der Abstand der Deckplatten ist dabei so gehalten, daß eine Magnetbandkassette mit leichtem Spiel zwischen den Deckwänden verschiebbar ist.
Der Kassetenschacht ist mit einem um Lagerstellen im Chassis drehbaren Kassettenlift gelenkig verbunden. Bei Drehung des Kassettenliftes in Absenkrichtung wird ebenfalls der Kassettenschacht abgesenkt (Spielposition).
In dem Kassettenlift befindet sich ein in Einschubrichtung der Magnetbandkassette verlaufender Längsschlitz, in dem ein Gleitstück eines Kassettenhalters geführt ist. Dieser weist ein hakenförmiges Teil auf, das in eine Zugriffsöffnung einer Magnetbandkassette einfallen kann. Das Gleitstück hat eine` Zapfen, der in einen Auswurfhebel eingreift, der die Kassette von einer Auswerfstellung in eine Absenkposition oberhalb der Spielstellung überführen kann.

Wird eine Magnetbandkassette in den Kassettenschacht eingeschoben, dann wird zunächst der Kassettenhalter auf die obere Wand der Kassette gleiten, wobei er sich elastisch verformt. Anschließend fällt er in der sogenannten Auswerfstellung in die in Einschubrichtung vorn liegende Zugriffsöffnung, wobei die elastische Verformung aufgehoben wird. Wird die Kassette nicht weit genug eingeschoben, so verbleibt der Kassettenhalter mit seinem Haken auf der oberen Wand der Kassette, wodurch sich der gesamte Kassettenhalter infolge der dann unter Umständen tagelang wirkenden Verformungskräfte plastisch verformt.

Wird die Kassette ausgeschoben werden, so wird sie von dem ausfahrenden Kassettenhalter im Wickelloch gehalten, so daß sie nicht aus dem Laufwerk herausfallen kann. Es kann jedoch passieren, daß der Haken des Kassettenhalters durch die Dynamik der Kassette beim Ausschieben aus dem Wickelloch der Kassette heraus auf die obere Wand der Kassette gleitet und dort dann ebenfalls auf Dauer plastisch verformt wird, wodurch die Haltefunktion des Kassettenhalters beeinträchtigt wird.
Wird bei einem derartigen Mechanismus das unbeabsichtigte Herausgleiten des Kassettenhalterhakens aus dem Wickelloch der Kassette dadurch verhindert, daß die Haltekraft, welche aus der elastischen Verformung des Kassettenhalters stammt, vergrößert wird, so hat dies zur Folge, daß der Kassettenhalter von der Kassette beim Einschieben in das Laufwerk eingeschoben wird, bevor der Kassettenhalterhaken auf die obere Wand der Kassette geglitten ist. Dies führt dazu, daß der automatische Kassetteneinzug gestartet wird, obwohl die Kassette noch nicht ordnungsgemäß eingeschoben ist.

Es ist Aufgabe der Erfindung, den Kassettenhalte-Mechanismus so zu gestalten, daß die plastische Verformung bei auf der oberen Kassettenwand stehendem Haken des Kassettenhalters vermieden wird, wobei gleichzeitig ein unbeabsichtigtes frühzeitiges Einschieben des Kassettenhalters vermieden wird.

Die Aufgabe ist erfindungsgemäß dadurch gelöst, daß der Kassettenhalter in seiner Führung in Höhenrichtung verformungsfrei kippen kann und die beim Ausschub zum Halten der Kassette mittels des Kassettenhalters benötigte Kraft von einer auf den Kassettenhalter einwirkenden Metallfeder herrührt, die so geformt ist, daß die den Kassettenhalter niederdrückende Kraft nach einem geringen Verfahrweg des Kassettenhalters in Kassetten-Einschubrichtung nicht mehr auf den Kassettenhalter einwirkt, und diesen annähernd kraftfrei auf die obere Kassettenwand gleiten läßt, wobei eine nur in dieser Zwischenposition wirkende Sperre bewirkt, daß der Kassettenhalter erst weiter eingeschoben werden kann, nachdem der Kassettenhalterhaken in das Wickelloch der Kassette eingefallen ist.

Durch die kippbare Lagerung des Kassettenhalters kann dieser beim Einschieben einer Kassette in den Kassettenschacht nahezu verformungsfrei verschwenken. Dies bedingt jedoch, daß die Verformungskraft des Kassettenhalters nicht dazu benutzt werden kann, um die Magnetbandkassette beim Ausschub festzuhalten. Die beim Ausschub zum Halten der Magnetbandkassette benötigte Kraft wird von einer auf den Kassettenhalter einwirkenden Metallfeder ausgeübt. Diese ist an ihrem Ende in zwei Höhenstufen ausgebildet und kann mit einer oberen Spitze und mit einer unteren Spitze auf den Kassettenhalter einwirken. Wenn die Kassette beim Einschieben gegen den Kassettenhalter gedrückt wird, so verschwenkt der Kassettenhalter, wird etwas nach hinten gedrückt und gleitet auf die obere Kassettenwand auf. Dabei gleitet der Kassettenhalterhaken von der unteren Spitze zur oberen Spitze ab der Metallfeder ab und diese wirkt nur noch mit einer reduzierten Kraft auf den Kassettenhalter ein. Wird die Kassette weiter eingeschoben, so fällt der Kassettenhalterhaken in das Wickelloch der Magnetbandkassette ein, der Kassettenhalterhaken gleitet von der oberen Spitze zur unteren Spitze der Metallfeder ab und die Metallfeder wirkt mit ihrer vollen Haltekraft auf den Kassettenhalter ein.

Nach einer weiteren Ausgestaltung der Erfindung ist vorgesehen, daß die Feder Bestandteil des Kassettenschachtes oder Kassettenliftes ist. Diese ist damit aus dem bereits vorhandenen Material herausgearbeitet und stellt kein Zusatzteil dar, das irgendwie besonders befestigt oder hergestellt werden muß.

Die Erfindung wird anhand der Zeichnung näher erläutert. Es zeigen:
Fig. 1 eine Ladevorrichtung des Laufwerkes eines Magnetbandkassettengerätes in Draufsicht,
Fig. 2 die Ladevorrichtung in einer Seitenansicht mit der Kassette in einer Position kurz vor dem ersten Kontakt mit dem Kassettenhalter,
Fig. 3 die Ladevorrichtung in einer Seitenansicht mit der Kassette in einer Position, in der der Kassettenhalter leicht in Einschubrichtung verschoben ist und der Kassettenhalterhaken gerade auf die Kassette aufgleitet,
Fig. 4 die Ladevorrichtung in einer Seitenansicht mit in das Wickelloch eingefallenem Kassettenhalterhaken.

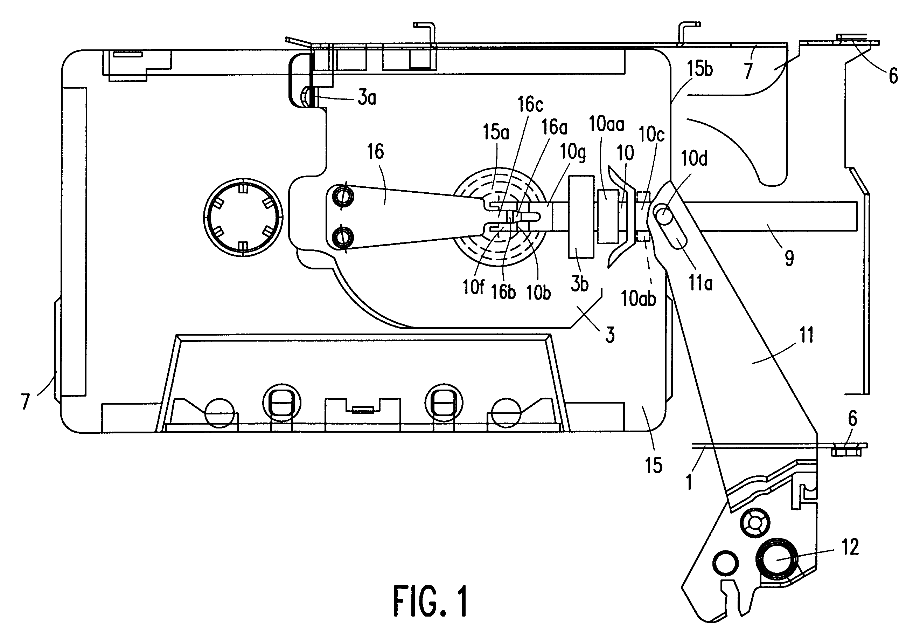

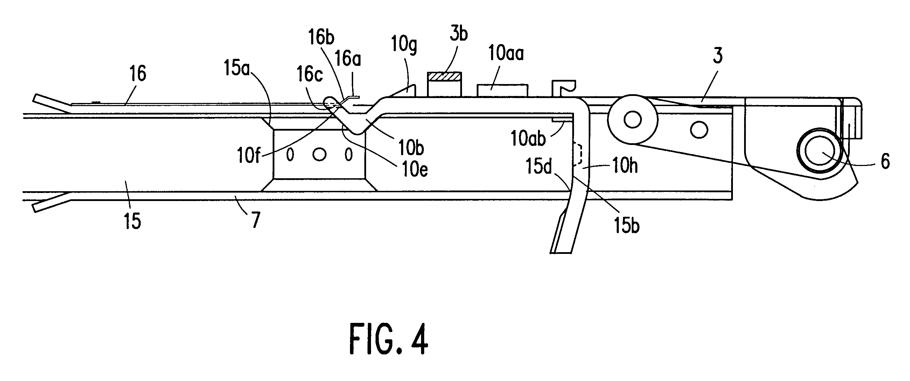

Fig. 1 zeigt einen am Chassis 1 eines Laufwerkes für ein Magnetbandkassettengerät angelenkten Kassettenlift 3. Das Laufwerk ist insbesondere für eine Benutzung in einem Kraftfahrzeug konstruiert. Die Kassettenlift 3 ist am Chassis 1 mittels Lageraugen 6 gelenkig angebunden. Ein Kassettenschacht 7 ist mittels nicht dargestellter Schaniere mit Scharnier-Gegenstücken 3a des Kassettenliftes 3 an diesem aufgehängt. Er besteht aus einer oberen Deckplatte 7a, auf der eine Kassettenhalterfeder 16 befestigt ist. Eine weitere Deckplatte 7b ist parallel zur Deckplatte 7a unter dieser angeordnet. Die beiden Deckplatten 7a,7b sind an rückwärtigen Kanten mittels einer Querwand 7c verbunden. In Einschubrichtung einer Magnetbandkassette 15, die durch einen Pfeil 8 angedeutet ist, erstreckt sich im Kassettenlift 3 ein Schlitz 9. In diesem Schlitz 9 ist ein Kassettenhalter 10 verschieblich geführt. Der Führung dient dabei ein Zentralstück 10a mit einer vorderen oben angeordneten Abstützung 10aa und einer hinteren unteren Abstützung 10ab. Entgegen der Einschubrichtung 8 erstreckt sich von dem Zentralstück 10a innerhalb des Schlitzes 9 ein Kassettenhalterhaken 10b. Dieser hat eine V-förmige oder hakenförmige Gestalt und kann, wie Fig. 4 besonders deutlich zeigt, in eine Wickelöffnung 15a der Kassette 15 eingreifen. Auf den Kassettenhalterhaken 10b wirkt eine Metallfeder 16 ein. Diese Metallfeder 16 ist an dem auf den Kassettenhalterhaken 10b einwirkenden Ende in zwei Höhenstufen ausgebildet. Sie weist eine obere Spitze 16a und eine untere Spitze 16c auf, die durch eine schräge Wand 16b verbunden sind. Entgegengesetzt zu dem Kassettenhalterhaken 10b ist in dem Schlitz 9 ein ebenfalls am Zentralstück 10a angreifender Ausleger 10c vorgesehen, der einen Stift 10d trägt. Auch der Ausleger 10c greift frei in den Schlitz 9. Der Stift 10d durchgreift eine Nut 11a eines Auswurfhebels 11. Dieser Auswurfhebel 11 ist um einen am Chassis 1 festliegenden Dorn 12 drehbar. Der Auswurfhebel 11 bringt den Lademechanismus bei einem Schwenken in der Uhrzeigerrichtung auf nicht näher erläuterte Weise in eine Stellung oberhalb der Spielposition und in entgegengesetzter Richtung aus der Spielposition wieder heraus in die Ausschubposition. Die Ausschubposition ist in Fig. 1 und 4 dargestellt. Die Ausschubposition ist diejenige Stellung des Kassettenhalterhakens 10b und des Auswurfhebels 11, in der der Kassettenhalterhaken 10b beim Einschieben einer Magnetbandkassette von Hand in deren vorderste Zugriffsöffnung 15a einfällt (Fig. 4). Von dort aus wird beim weiteren Einschieben der Magnetbandkassette der Kassettenhalterhaken 10b in Einschubrichtung 8 verschoben, wobei er den Auswurfhebel 11 so weit mitnimmt und verschwenkt, daß zunächst eine Übernahme der Einschubbewegung durch einen mechanischen Einzug erfolgt und über diesen mechanischen Einzug der Kassettenschacht in die Spielposition überführt wird. Die in Fig.4 dargestellte Stellung des Kassettenhalterhakens 10b und des Auswurfhebels 11 ist außerdem die Stellung, in die Auswurfhebel 11, Kassettenhalterhaken 10b und Magnetbandkassette 15 gelangen, wenn durch das Einschieben einer nicht dargestellten Auswurftaste der Auswurfhebel 11 entgegen dem Uhrzeigersinn verschwenkt, um den Kassettenschacht 7 und die Magnetbandkassette 15 wieder in die Auswerfstellung zu bringen, in der die Magnetbandkassette 15 liegen bleibt und vom Kassettenhalterhaken 10b weiterhin gehalten ist. Erst durch ein Herausziehen der Magnetbandkassette 15 von Hand wird der Kassettenhalterhaken 10b aus der Zugriffsöffnung 15a der Magnetbandkassette 15 herausgedrängt und die Magnetbandkassette 15 kann dem Magnetbandkassettengerät entnommen werden.

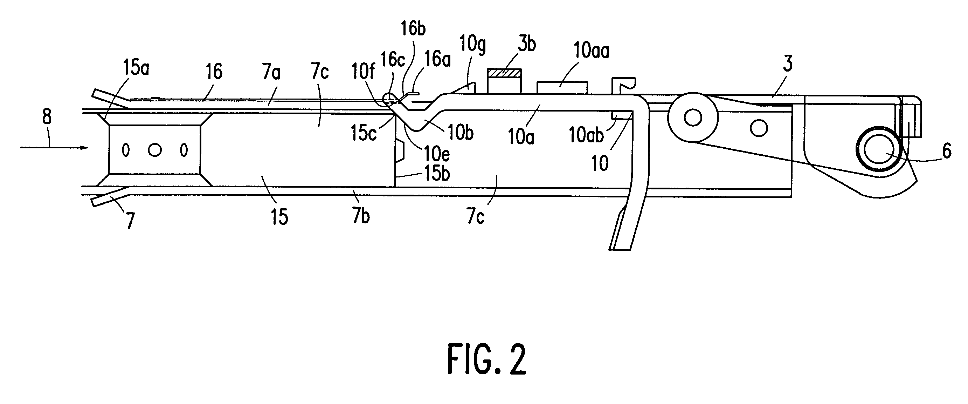

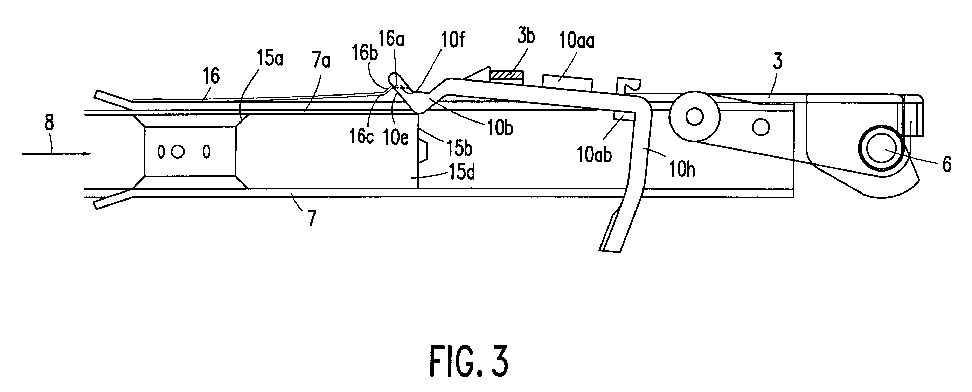

Fig. 2 zeigt die Ladevorrichtung in einer Seitenansicht mit der Magnetbandkassette 15 in einer Position kurz vor dem ersten Kontakt mit dem Kassettenhalter 7. Die in Einschubrichtung vorne liegende Schmalseite 15b der Kassette 15 stößt gerade mit ihrer oberen Kante 15c gegen die Einführschräge 10e des Kassettenhalterhakens 10b. Die Kassettenhalterfeder 16 drückt mit ihrer unteren Spitze 16c von oben gegen den Kassettenhalter 10 und verhindert weitgehend eine Auslenkung des Kassettenhalters 10 nach oben. Beim anschließenden weiteren Einschieben der Kassette 15 wird der Aufbau in die in Fig. 3 dargestellte Position gebracht.

Fig. 3 zeigt die Ladevorrichtung in einer Seitenansicht mit der Magnetbandkassette 15 in einer Position, in der der Kassettenhalter 10 und die Magnetbandkassette 15 leicht in Einschubrichtung 8 verschoben ist und der Kassettenhalterhaken 10b gerade auf die Magnetbandkassette 15 aufgleitet. Dabei ist der Kassettenhalter 10 relativ zu der Kassettenhalterfeder 16 so weit verschoben, daß seine Stützwand 10f an der schrägen Wand 16b der Kassettenhalterfeder 16 abgeglitten ist. Die Kassettenhalterfeder 16 drückt nun mit ihrer oberen Spitze 16a gegen den Kassettenhalter 10. Dadurch, daß nun die obere Spitze 16a und nicht die untere Spitze 16c auf den Kassettenhalter 10 einwirkt, ist die auf den Kassettenhalter 10 einwirkende Kraft deutlich reduziert worden. Dadurch, daß der Auswurfhebel 11 auf nicht näher beschriebene Weise entgegen der Einschubrichtung gegen den Kassettenhalter 10 drückt, ist dieser mit seiner Einführschräge 10e an der oberen Kante 15c der Kassette ausweichend nach oben verschwenkt worden. Dieses Verschwenken läuft ohne Verformung des Kassettenhalters 10 ab, da dieser um seine hintere obere Auflage 10ab kippt.
Ein weiteres Einschieben des Kassettenhalters ist zu diesem Zeitpunkt nicht möglich, da seine Anschlagwand 10g durch das Verschwenken vor der Brücke 3b zu liegen kommt, die eine weitere Verschiebung blockiert. Im Zuge des weiteren Einschiebens der Magnetbandkassette 15 gleitet diese unter dem verschwenkten Kassettenhalterhaken 10b in die Auswurfstellung gemäß Fig. 4.

Fig. 4 zeigt die Ladevorrichtung in einer Seitenansicht mit in das Wickelloch 15a eingefallenem Kassettenhalterhaken 10b. Der Auswurfhebel 11, welcher zuvor durch die Kopplung an den Kassettenhalter 10 über den Bolzen 10d leicht gegen Federkraft in Einschubrichtung verschwenkt war, kann, sobald der Kassettenhalterhaken 10b in das Wickelloch 15a einfällt, zurückschwenken, wodurch der Kassettenhalter 10 unter die untere Spitze 16c der Kassettenhalterfeder 16 zurückkippt und in das Wickelloch 15a der Magnetbandkassette 15 eintaucht. Diese Position ist identisch mit der Stellung, die der Mechanismus beim Ausschieben der Magnetbandkassette 15 von der Wiedergabeposition einnimmt. Wird die Magnetbandkassette 15 weiter eingeschoben, so stößt ihre in Einschubrichtung vorne liegende Schmalseite 15b mit ihrer unteren Kante 15d gegen den Anschlag 10h des Kassettenhalters 10, wodurch der Kassettenhalterhaken 10b gegen die obere Seite der Kassette 15 gedrückt wird und die Anschlagwand 10g so weit von der Brücke 3b wegschwenkt, daß der Kassettenhalter ohne Behinderung unter dieser durchfahren kann, so daß die Kassette jetzt komplett einschiebbar ist.

## Patentansprüche

1. Magnetbandkassettengerät mit einem Laufwerk, das einen Lademechanismus für Magnetbandkassetten (15) aufweist, die in den Außenwänden für in den Kassetten vorgesehene Magnetbandwickel mit Wickelkernen Wickellöcher (15a) aufweisen, durch die sowohl Wickeldorne des Laufwerkes als auch ein Kassettenhalterhaken (10b) eines Kassettenhalters (10), der in Einschieberichtung (8) in einer Wand eines Kassettenliftes (3) geführt ist, einführbar sind, wobei der Kassettenhalterhaken (10b) in der Auswurfstellung des Laufwerkes beim Einschieben der Magnetbandkassette (15) in das beim Einschieben vordere Wickelloch (15a) einfällt und in diesem verbleibt, bis die Magnetbandkassette (15) in die Spielposition abgesenkt wird oder aus dem Laufwerk herausgezogen wird, dadurch gekennzeichnet, daß der Kassettenhalter (10) in seiner Führung in Höhenrichtung verformungsfrei kippen kann und die beim Ausschub zum Halten der Magnetbandkassette (15) mittels des Kassettenhalters (10) benötigte Kraft von einer auf den Kassettenhalter (10) einwirkenden Metallfeder (16) herrührt, die so geformt ist, daß die den Kassettenhalter (10) niederdrückende Kraft nach einem geringen Verfahrweg des Kassettenhalters (10) in Kassetten-Einschubrichtung (8) nicht mehr auf den Kassettenhalter (10) einwirkt, und diesen annähernd kraftfrei auf die obere Kassettenwand (1a) gleiten läßt, wobei eine nur in dieser Zwischenposition wirkende Sperre (10g) bewirkt, daß der Kassettenhalter (10) erst weiter eingeschoben werden kann, nachdem der Kassettenhalterhaken (10b) in das Wickelloch (15a) der Magnetbandkassette (15) eingefallen ist.

2. Magnetbandkassettengerät nach Anspruch 1, dadurch gekennzeichnet, daß die Metallfeder (16) Bestandteil des Kassettenschachtes (7) oder Kassettenliftes (3) ist.
